# EUROPÄISCHE PATENTSCHRIFT

(11) **EP 1 110 820 B1**
(45) Veröffentlichungstag und Bekanntmachung des Hinweises auf die Patenterteilung: **21.09.2005**
(21) Anmeldenummer: 00126914.1
(22) Anmeldetag: 08.12.2000
(51) Int. Cl.: B60R 11/02

(54) **Elektronisches Gerät mit einer in eine schräg geneigte Position schwenkbaren Frontklappe**
Electronic apparatus with a front panel pivotable to an inclined position
Appareil électronique avec façade basculable dans une position inclinée

(30) Priorität: 23.12.1999 DE 19962817
(43) Veröffentlichungstag der Anmeldung: 27.06.2001
(73) Patentinhaber: SIEMENS AKTIENGESELLSCHAFT, 80333 München (DE)
(72) Erfinder: Jäkel, Volker, Dr., 35614 Asslar-Werdorf (DE)

(56) Entgegenhaltungen:
- DE-A- 19 535 678
- PATENT ABSTRACTS OF JAPAN vol. 1996, no. 02, 29. Februar 1996 (1996-02-29) & JP 07 285390 A (SUMITOMO WIRING SYST LTD), 31. Oktober 1995 (1995-10-31)
- PATENT ABSTRACTS OF JAPAN vol. 1999, no. 04, 30. April 1999 (1999-04-30) & JP 11 022725 A (FUJITSU TEN LTD), 26. Januar 1999 (1999-01-26)
- PATENT ABSTRACTS OF JAPAN vol. 2000, no. 06, 22. September 2000 (2000-09-22) & JP 2000 076838 A (ALPINE ELECTRONICS INC), 14. März 2000 (2000-03-14)
- PATENT ABSTRACTS OF JAPAN vol. 1995, no. 03, 28. April 1995 (1995-04-28) & JP 06 336142 A (TOSHIBA CORP), 6. Dezember 1994 (1994-12-06)
- PATENT ABSTRACTS OF JAPAN vol. 2000, no. 02, 29. Februar 2000 (2000-02-29) & JP 11 321472 A (XANAVI INFORMATICS CORP), 24. November 1999 (1999-11-24)
- PATENT ABSTRACTS OF JAPAN vol. 1998, no. 10, 31. August 1998 (1998-08-31) & JP 10 119660 A (HARNESS SOGO GIJUTSU KENKYUSHO:KK;SUMITOMO WIRING SYST LTD; SUMITOMO E), 12. Mai 1998 (1998-05-12)
- PATENT ABSTRACTS OF JAPAN vol. 1998, no. 05, 30. April 1998 (1998-04-30) & JP 10 016653 A (KENWOOD CORP), 20. Januar 1998 (1998-01-20)

## Beschreibung

Die Erfindung betrifft ein elektronisches Gerät, insbesondere Autoradio.

Die Frontseite elektronischer Geräte ist oftmals nicht groß genug, um die dort vorzusehenden Einrichtungen unterbringen zu können. Wenn beispielsweise ein Autoradio einen Schacht für Kassetten und einen Schacht für Compaktdisks hat, dann reicht häufig der Platz für ein ausreichend großflächiges Display unterhalb der Schächte nicht mehr aus. In solchen Fällen hat es sich als zweckmäßig herausgestellt, wenn man die Frontklappe beweglich ausführt, so dass sie motorisch in eine solche Lage verfahren werden kann, in der ein oberer Bereich der Frontseite von ihr freigegeben wird. Man kann dann beispielsweise in diesem freiwerdenden Bereich die beiden erforderlichen Schächte anordnen.

Bei den bisher bekannten elektronischen Geräten mit einer solchen verfahrbaren Frontklappe ist die obere Kante der Frontklappe mit einem in einer Vertikalführung motorisch verfahrbaren Schlitten und die untere Kante der Frontklappe mit einer motorisch in das Gehäuse des Gerätes hinein oder aus ihm heraus verfahrbaren Ausschub gelenkig verbunden. Deshalb sind zum Bewegen der Frontklappe stets zwei Antriebe erforderlich, welche steuerungstechnisch aufeinander abgestimmt sein müssen, damit die Frontklappe aus einer genau senkrechten Stellung in die gewünschte Freigabestellung zu gelangen vermag. Diese bekannten elektronischen Geräte sind aus diesem Grund relativ aufwendig gestaltet.

Aus der DE-A-195 35 678 ist ein elektronisches Gerät, insbesondere Autoradio gemäß der Oberbegriff des Anspruchs 1 bekannt. Hierbei ist die Frontklappe getrieblich mit einem einzigen Antrieb zur Herbeiführung der den oberen Bereich der Frontseite des Gehäuses freigebenden Schwenkbewegung ausgestattet.

Der Erfindung liegt das Problem zugrunde, ein elektronisches Gerät der letztgenannten Art so auszubilden, dass die Mittel zum motorischen Bewegen seiner Frontklappe zwischen einer vertikalen Endstellung und einer einen oberen Bereich der Frontklappe freigebenden Bedienstellung möglichst einfach gestaltet sind.

Dieses Problem wird erfindungsgemäß durch ein elektronisches Gerät nach Anspruch 1 gelöst.

Da gemäß dem Stand der Technik nur noch ein einziger Antrieb zum Bewegen der Frontklappe vorgesehen ist, entfällt bereits die Notwendigkeit der gegenseitigen Abstimmung zweier Antriebe, so dass die Steuerung der Frontklappe sich wesentlich vereinfacht. Diese braucht bereits nur noch so gestaltet zu sein, dass der Antrieb nach dem Einschalten bei Erreichen der jeweiligen Endstellung abgeschaltet wird, wozu beispielsweise Endschalter verwendet werden können.

Erfindungsgemäß ist nun zur Vermeidung von Geradführungen vorgesehen, dass zur Führung der Frontklappe zwei Drehgelenke vorgesehen sind, von denen ein unteres Drehgelenk in Höhe der Unterkante der Frontseite angeordnet und ein oberes Drehgelenk innerhalb des Gehäuses des Gerätes zurückversetzt angeordnet ist, und dass das obere Drehgelenk mit einer Koppel nahe der Oberkante der Frontklappe und das untere Drehgelenk mit einer weiteren Koppel im mittleren Bereich der Frontklappe mit dieser gelenkig verbunden ist. Ein solches viergliedriges Gelenkgetriebe erlaubt Freiheiten bezüglich der Lage der geöffneten Frontklappe.

Die Erfindung lässt im Rahmen des Anspruchs 1 verschiedene Ausführungsformen zu. Zur Verdeutlichung des Grundprinzips der Erfindung werden zunächst mehrere nicht beanspruchte Ausführungen zur Illustration der Fachgebieter und dann eine erfindungsgemäße Ausführungsform in den Zeichnungen dargestellt und nachfolgend beschrieben. Die Zeichnung zeigt in
- Figur 1: einen schematischen Längsschnitt durch ein elektronisches Gerät,
- Figur 2 - 6: unterschiedliche Prinzipskizzen eines Mechanismus zum Bewegen einer Frontklappe des Gerätes, die nicht beansprucht werden,
- Figur 7 - 8: Prinzipskizzen des erfindungsgemäßen Mechanismus zum Bewegen einer Frontplatte.

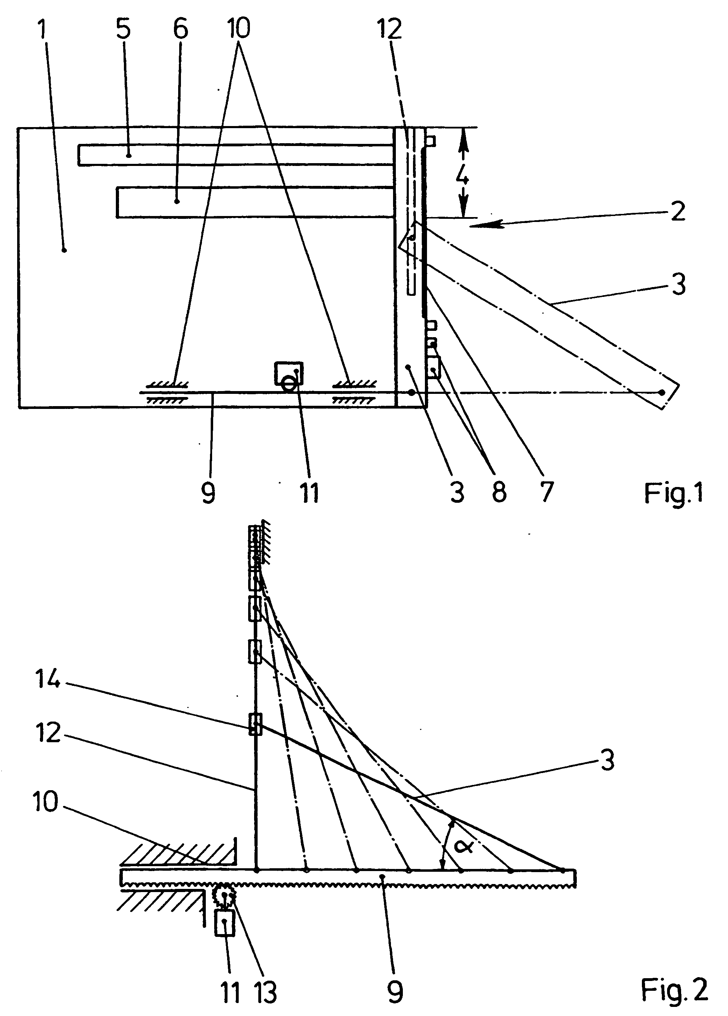

Das in Figur 1 dargestellte elektronische Gerät, bei dem es sich um ein Autoradio handeln soll, hat ein Gehäuse 1 mit einer Frontseite 2, gegen die eine Frontklappe 3 anliegt. Diese Frontklappe 3 kann durch einen später zu beschreibenden Mechanismus aus der in durchgezogenen Linien dargestellten, die Frontseite 2 vollständig abdeckenden Position in eine strichpunktiert dargestellte, schräg ausgerichtete Bedienstellung, in welcher sie einen oberen Bereich 4 der Frontseite 2 freigibt, verfahren werden. Innerhalb des Gehäuses 1 sind in diesem oberen Bereich 4 zwei Schächte 5, 6 vorgesehen, von denen der obere zum Abspielen von Compaktdisks und der andere zum Abspielen von Kassetten ausgebildet sein kann. Die Frontklappe 3 hat an ihrer Vorderseite ein großflächiges Display 7 und darunter mehrere Bedienelemente 8 für das Autoradio.

Im unteren Bereich des Gehäuses 1 ist ein Ausschub 9 in einer Schubladenführung 10 verschieblich angeordnet. Die vordere Seite dieses Ausschubs 9 ist nahe der Unterkante der Frontklappe 3 mit dieser verbunden. Ein Antrieb 11 vermag den Ausschub 9 aus dem Gehäuse 1 heraus in Figur 1 gesehen nach rechts in die strichpunktierte Position zu verfahren. Nahe der oberen Kante ist die Frontklappe 3 in einer Vertikalführung 12 geführt.

Steuert man den Antrieb 11 an, dann wird der Ausschub 9 aus dem Gehäuse 1 herausbewegt. Hierdurch bewegt sich die Unterkante der Frontklappe 3 von der Frontseite 2 weg, während ihre Oberkante sich in der Vertikalführung 12 nach unten bewegt. In der strichpunktiert dargestellten Endstellung der Frontklappe 3 liegt der obere Bereich 4 der Frontseite 2 frei, so das jeweils eine CD oder eine Kassette in den entsprechenden Schacht 5 oder 6 eingeschoben werden kann.

Die Figur 2 dient der zusätzlichen Verdeutlichung des Bewegungsablaufes der Frontklappe 3. Diese ist dort in einer dick durchgezogenen Linie in Bedienstellung und gestrichelt in verschiedenen Zwischenstellungen dargestellt. Der Ausschub 9 ist in Figur 2 als Zahnstange ausgebildet, die von einem Ritzel 13 des Antriebs 11 linear in der Schubladenführung 10 verschoben werden kann. Nahe ihrer oberen Kante ist die Frontklappe 3 mit einem Schlitten 14 gelenkig verbunden, der auf der Vertikalführung 12 verschieblich ist. Um allein mittels des Antriebs 11 aus der dargestellten Bedienstellung der Frontklappe 3 wieder in die vertikale Position gelangen zu können, darf der Winkel α zwischen der Frontklappe 3 und dem Ausschub 9 nicht kleiner als etwa 30° sein.

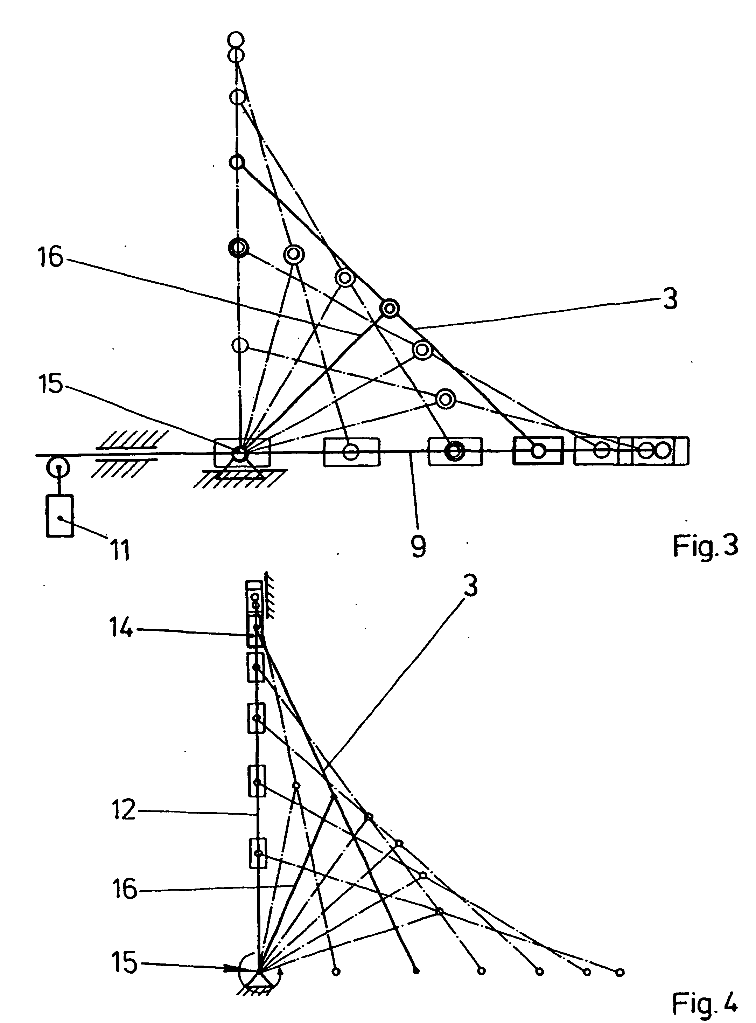

Bei der Ausführungsform nach Figur 3 wurde auf eine vertikale Geradführung verzichtet. Die untere Kante der Frontklappe 3 ist genau wie bei dem zuvor beschriebenen Ausführungsbeispiel mit einem verfahrbaren Ausschub 9 gelenkig verbunden. Zur Einsparung der Vertikalführung dient ein Drehgelenk 15, von dem aus eine Koppel 16 zu einem mittleren Bereich der Frontklappe 3 führt, wo sie mit dieser gelenkig verbunden ist. Der Antrieb 11 könnte bei dieser Ausführungsform auch statt zum Verschieben des Ausschubs 9 zum Verschwenken der Koppel 16 am Drehgelenk 15 oder beispielsweise dort vorgesehen sein, wo die Koppel 16 gelenkig mit der Frontklappe 3 verbunden ist.

Die Figur 4 zeigt eine kinematische Umkehr des Mechanismus nach Figur 3. Bei dieser Ausführungsform wurde auf den Ausschub 9 verzichtet und ersatzweise wieder wie gemäß den Figuren 1 und 2 eine Vertikalführung 12 vorgesehen. Genau wie bei der Figur 3 führt von dem Drehgelenk 15 die Koppel 16 zur Frontklappe 3, deren untere Kante jetzt jedoch völlig frei endet. Die obere Kante der Frontklappe 3 ist wiederum mit dem Schlitten 14 verbunden, welcher auf der Vertikalführung 12 sich zu verschieben vermag. Natürlich kann man bei allen Ausführungsformen auf einen Schlitten verzichten und statt dessen beispielsweise Bolzen in eine Kulissenführung eingreifen lassen.

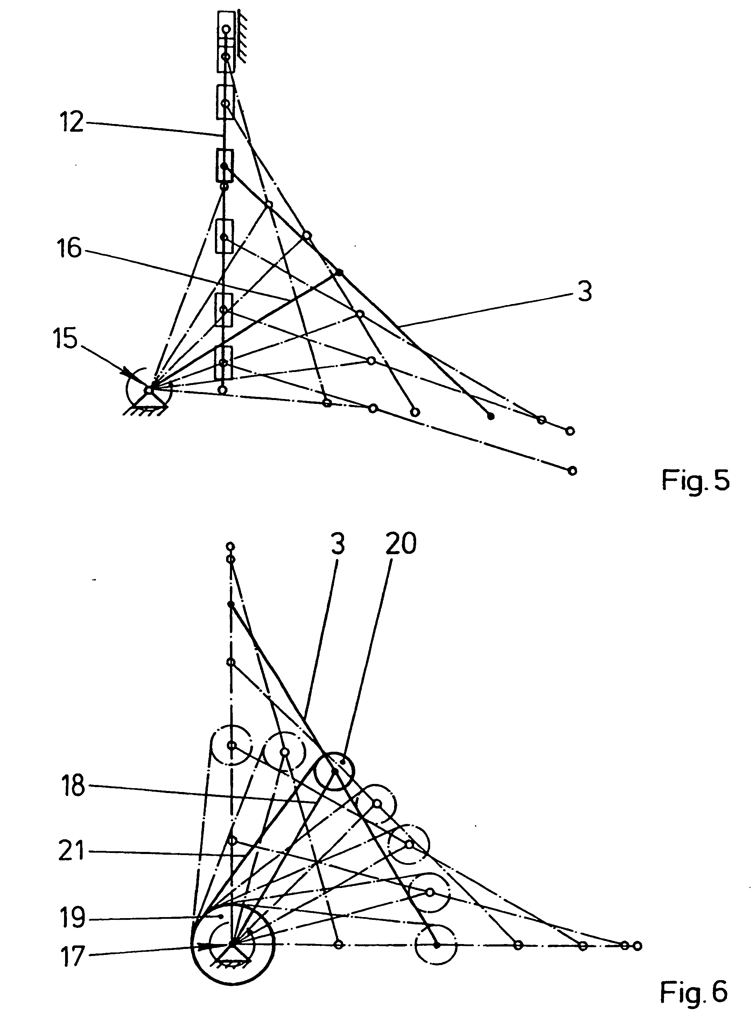

Bei der Ausführungsform nach Figur 5 wurde das Drehgelenk 15 von der Vertikalführung 12 weg zur Innenseite des Gerätes hin versetzt. Dadurch vermag die Frontklappe 3 in Offenstellung eine nahezu waagerechte Position einzunehmen.

Die Ausführungsform nach Figur 6 zeichnet sich dadurch aus, dass auf Geradführungen gänzlich verzichtet wurde.

Hierzu ist ein Schwenklager 17 vorgesehen, von dem aus eine Getriebestange 18 zur Frontklappe 3 führt, mit der sie gelenkig verbunden ist. Im Schwenklager 17 ist die Getriebestange 18 synchron mit einem Riemenrad 19 verdrehbar, während sie relativ zur Frontklappe 3 synchron mit einem weiteren Riemenrad 20 schwenkbar ist, welches halben Durchmesser wie das Riemenrad 19 hat. Beide Riemenräder 19, 20 sind durch einen Riemen 21 miteinander verbunden, bei dem es sich beispielsweise um einen Zahnriemen oder einen fest mit beiden Riemenrädern 19, 20 verbundenen Draht handeln kann. Der Riemen 21 sorgt dafür, dass die Frontklappe 3 beim Herunterschwenken der Getriebestange 18 zunehmend in die Waagerechte verschwenkt wird.

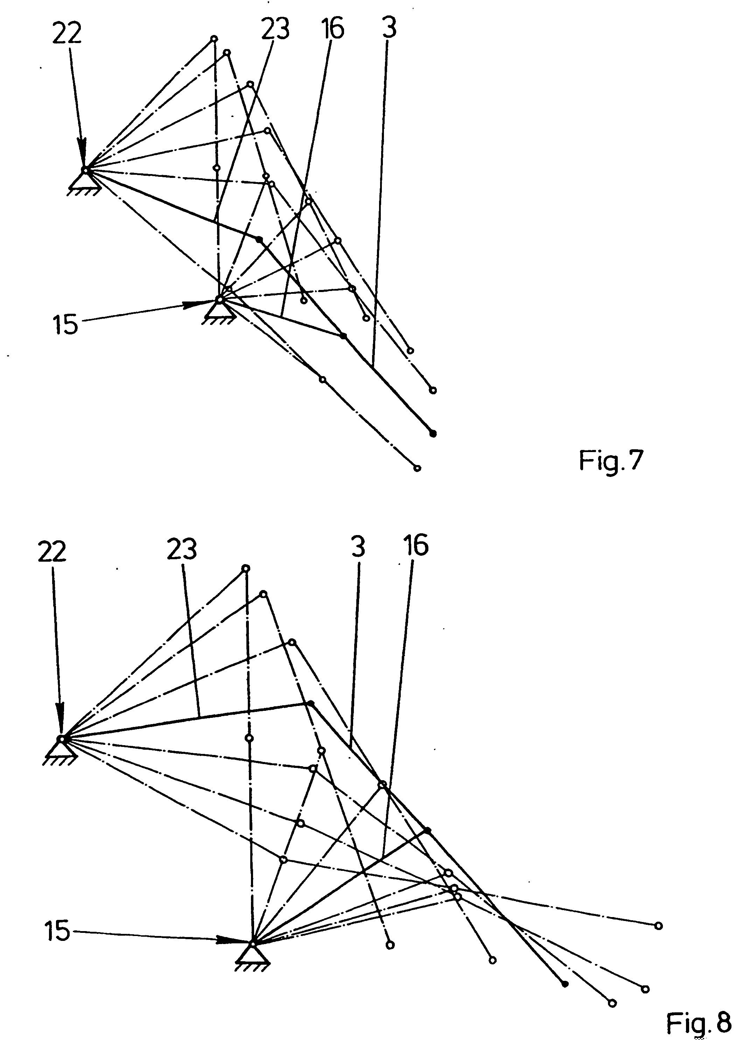

Bei der erfindungsgemäßen Ausführungsform nach den Figuren 7 und 8 führt genau wie bei den Ausführungsformen nach den Figuren 3, 4 und 5 von dem Drehgelenk 15 eine Koppel 16 zu einem mittleren Bereich der Frontklappe 3. Zusätzlich ist jedoch ein weiteres Drehgelenk 22 vorgesehen, von dem eine Koppel 23 zur oberen Kante der Frontklappe 3 führt, wo sie mit dieser gelenkig verbunden ist. Auf diese Weise entsteht ein viergliedriges Gelenkgetriebe, welches gänzlich ohne Geradführungen auskommt und dessen Bewegungen einen einzigen Antrieb erfordern, beispielsweise im Drehgelenk 15.

## Patentansprüche

1. Elektronisches Gerät, insbesondere Autoradio, mit einem Gehäuse (1), welches vor einer Frontseite (2) eine ein Display und/oder Bedienelement aufweisende Frontklappe (3) hat, die motorisch aus einer das Gehäuse (1) verschließenden, vertikalen Position in eine mit ihrer Unterkante vor dem Gehäuse liegende und mit ihrer Oberkante unterhalb der Oberkante des Gehäuses liegende und **dadurch** einen oberen Bereich der Frontseite des Gehäuses freigebende, schräg geneigte Bedienstellung schwenkbar ist, wobei die Frontklappe (3) getrieblich mit einem einzigen Antrieb (11) zur Herbeiführung der den oberen Bereich der Frontseite (2) des Gehäuses (1) freigebenden Schwenkbewegung ausgestattet ist, wobei zur Führung der Frontkappe (3) ein unteres Drehgelenk (15) in Höhe der Unterkante der Frontseite (2) angeordnet ist **dadurch gekennzeichnet, dass** zur Führung der Frontklappe (3) zwei Drehgelenke (15, 22) vorgesehen sind, von denen das obere Drehgelenk (22) innerhalb des Gehäuses (1) des Gerätes zurückversetzt angeordnet ist, und dass das obere Drehgelenk (22) mit einer Koppel (23) nahe der Oberkante der Frontklappe (3) und das untere Drehgelenk (15) mit einer weiteren Koppel (16) im mittleren Bereich der Frontklappe (3) mit dieser gelenkig verbunden ist.

## Claims

1. Electronic appliance, particularly a car radio, having a housing (1) which has, in front of a front face (2), a front flap (3) having a display and/or a control element, which front flap (3) can be pivoted by a motor from a vertical position sealing the housing (1) into an obliquely inclined operating position in which its bottom edge is in front of the housing and its top edge is below the top edge of the housing and thus exposes an upper region of the front face of the housing, the front flap (3) being equipped, for driving purposes, with a single drive mechanism (11) for bringing about the pivot movement which exposes the upper region of the front face (2) of the housing (1), and a bottom hinged joint (15) being arranged at the level of the bottom edge of the front face (2) in order to guide the front flap (3), **characterized in that** two hinged joints (15, 22) are provided for guiding the front flap (3), among which the top hinged joint (22) is arranged set back inside the housing (1) of the appliance, and **in that** the top hinged joint (22) is articulated to the front flap (3) by means of a coupler (23) close to the top edge of the front flap (3) and the bottom hinged joint (15) is articulated to the front flap (3) by means of a further coupler (16) in the central region of the front flap (3).

## Revendications

1. Appareil électronique, notamment poste autoradio, comportant un boîtier (1) ayant, devant une face avant (2), un volet avant (3), portant un écran et / ou un élément de commande, qui peut pivoter, sous l'effet d'un moteur, d'une position verticale, dans laquelle il ferme le boîtier (1), dans une position de commande oblique, dans laquelle son arête inférieure se trouve devant le boîtier et son arête supérieure se trouve au-dessous de l'arête supérieure du boîtier et, ainsi, ouvre une partie supérieure de la face avant du boîtier, le volet avant (3) étant équipé d'un seul entraînement (11) provoquant le mouvement de pivotement qui ouvre la partie supérieure de la face avant (2) du boîtier (1), une charnière inférieure (15) étant disposée, pour guider le mouvement du volet avant (3), à la hauteur de l'arête inférieure de la face avant (2), **caractérisé par le fait qu**'il est prévu, pour guider le mouvement du volet avant (3), deux charnières (15, 22), dont la charnière supérieure (22) est disposée en retrait à l'intérieur du boîtier (1) de l'appareil et que la charnière supérieure (22) est liée à une bielle (23), elle-même liée au volet avant (3) par une articulation près de l'arête supérieure du volet avant (3), et la charnière inférieure (15) est liée à une autre bielle (16), elle-même liée au volet avant (3) par une articulation dans la partie centrale du volet avant (3).
